(19) Europäisches Patentamt / European Patent Office / Office européen des brevets

(11) **EP 1 841 230 A1**

(12) **EUROPEAN PATENT APPLICATION**

(43) Date of publication:
**03.10.2007 Bulletin 2007/40**

(51) Int Cl.:
*H04N 7/26* (2006.01)

(21) Application number: **06006302.1**

(22) Date of filing: **27.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Matsushita Electric Industrial Co., Ltd.**
**Kadoma-shi**
**Osaka**
**571-8501 (JP)**

(72) Inventors:
• **Wittmann, Steffen**
  **63225 Langen (DE)**
• **Wedi, Thomas, Dr.**
  **63225 Langen (DE)**

(74) Representative: **Grünecker, Kinkeldey,**
**Stockmair & Schwanhäusser**
**Anwaltssozietät**
**Maximilianstrasse 58**
**80538 München (DE)**

(54) **Adaptive wiener filter for video coding**

(57)    The present invention determines an adapted set of filter parameters based on the disturbed image data and the corresponding original uncorrupted image data. Since the original image data is not available in a decoder, a conventional encoder can only employ an adaptive filtering based on the corrupted image signal. The present invention determines an enhanced set of filter parameters based on an uncorrupted image signal in the encoder. In order enable a filtering of image data in the decoder, the determined filter parameters are transmitted from the encoder to the decoder in combination with the encoded image data. The decoder is extracting the filter parameters from the encoded image data. In this way, the decoder applies an improved filtering event though the uncorrupted image data is not available at the decoder.

Fig. 3

EP 1 841 230 A1

**Description**

The present invention relates to the encoding and decoding of motion picture video data. Particularly, the present invention relates to a method and an apparatus for encoding and decoding video data, including an adaptive filtering of the image data.

Motion pictures are being adopted in increasing numbers of applications, ranging from video-telephoning and video-conferencing to digital television and DVD. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 / AVC or MPEG-4 / AVC.

The encoding approach underlying most of these standards consists of the following main stages:

(i) Dividing each individual frame into blocks of pixels in order to subject each video frame to data compression at a block level.

(ii) Reducing spatial redundancies within a video frame by applying each block of video data to a transform from the spatial domain into the frequency domain.

(iii) Quantizing the resulting transform coefficients. In this way, the data volume of the encoded image data is reduced.
(iv) Entropy encoding the quantized transform coefficients.

The original transform coefficient values cannot be recovered from the quantized transform coefficients due to a data loss introduced by said quantizing operation. The resulting image quality is impaired by a corresponding quantizing noise

In order to further minimize the data volume of the encoded image data, an optional fifth stage can be added to the above coding approach:

(v) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

During the encoding and decoding on the image data, several disturbances are added to the image. For example, a quantization noise is added when the DCT coefficients are quantized. Further, blocking effects will occur when the image is separated into a plurality of image blocks and each block is encoded separately.

In order to improve the image quality of the decoded image data, the decoded image data is filtered. For example, blocking effects are reduced by smoothing the pixels at the border of each block. For this purpose, a linear filtering is applied to the relating pixel values at the block borders. In this way, the subjective image quality may be improved.

However, such a filter only addresses to some particular pixels at the border of an image block. There is no filtering applied to the inner pixel values of a block. For example, the filtering is performed by employing a linear filter having predetermined filter coefficients. Hence, the filter does not consider the content of the current image. In particular, the filter does not consider whether the image contains sharp details or only a smooth area.

In order to further improve the image quality, an adaptive filtering may be applied, for instance, by analyzing the content of the images. For example, the content of the currently and / or previously encoded image data is analyzed and the filter parameters are adapted depending on the analyzed image data. In this way, a further improvement of the subjective image quality is achieved.

A conventional adaptive filter is determining the filter parameters depending on disturbed image data of currently or previously decoded images. Although, a user may consider the filtered image data as a subjective "better" image, there is still an unknown difference between a filtered image and the undisturbed "true" image.

US-A-2005/0105 627 describes an adaptive filtering of a video sequence. In order to adapt the filter to the current image data, motion and noise of the current decoded image data is estimated. Based on the estimated motion and noise, an iterative determination of filter parameters is carried out.

However, the improvement of the image quality by an adaptive filtering is limited. A further enhancement of the image quality is only achieved by increasing the data rate of the encoded image data. Thus, the image quality is limited by the storage capacity of a recording medium or the bandwidth of a transmission line.

The present invention aims to enhance the image quality of decoded image data.

This is achieved by the features of the independent claims.

According to a first aspect of the present invention, an image encoder for encoding a sequence of images is provided. The image encoder includes an encoding unit, a decoding unit, and a filter parameter estimator. The encoding unit is encoding image data and the decoding unit is decoding encoded image data. The filter parameter estimator is determining a filter parameter based on the image data to be encoded and corresponding image data of the decoding unit. The determined filter parameter is inserted into the encoded image data.

According to a second aspect of the present invention, a method for encoding a sequence of images is provided. Image data is encoded and encoded image data is decoded. A filter parameter is determined based on the image data to be encoded and the corresponding decoded image data of the decoding step. The determined filter parameter is inserted into the encoded image data.

According to a further aspect of the present invention, an image decoder for decoding a sequence of encoded image data is provided. The image decoder includes a decoder unit, a filter and a filter parameter extracting unit. The decoder decodes encoded image data. The filter parameter extracting unit is extracting a filter parameter which has been inserted into the encoded image data. The filter is filtering image data of the decoder in accordance with the extracted filter parameter.

According to still a further aspect of the present invention, a method for decoding a sequence of encoded image data is provided. Encoded image data is encoded. A filter parameter is extracted which has been inserted into the encoded image data. A filtering of the image data of the decoding step is performed in accordance with the extracted filter parameter.

It is the particular approach of the present invention to perform a filter parameter estimation and a filtering of image data separately. A filter parameter estimation is carried out in an encoder based on uncorrupted image data. In particular, the input signal provided to the encoder is used as uncorrupted image data.

As the uncorrupt image data signal is not available at a decoder, the decoder cannot perform such a filter parameter estimation by its own. In order to enable the decoder to enhance the image quality of the filtered image data, the present invention determines the enhanced filter parameter in an encoder and provides the determined filter parameter to the decoder. Hence, an enhanced filtering is achieved in the decoder and the image quality of the filtered image data is improved.

Preferably, the image encoder further comprises a memory for storing reference image data, a prediction unit for predicting image data of a current image to be encoded based on the stored reference data, and a prediction error determining unit for determining a prediction error based on the predicted image data and the current image data. The encoding unit encodes the determined prediction error and the decoding unit decodes the encoded image data for obtaining currently decoded image data. The filter parameter is determined based on the image data to be encoded and the corresponding predicted image data.

According to another preferred embodiment, the filter parameter is determined based on the image data to be encoded and the corresponding currently decoded image data.

Preferably, the filter parameter is determined in order to minimize a difference between a filter result when filtering the decoded image data and the corresponding image data of the current image. By minimizing the difference between the uncorrupted image data and the filtered image data, the quality of the filtered image data can be improved.

An improved filter parameter can be determined by calculation of the filter parameters based on an autocorrelation of the currently decoded image data, and a cross correlation between the currently decoded image data and the corresponding image data of the current image. Preferably, a Wiener filter is employed for determining the filter coefficients and performing the filter operation. Accordingly, the filter coefficients can be adjusted in accordance with the currently decoded image data and the corresponding uncorrupted data of the current image.

Preferably, the filter parameters are inserted into an header of the encoded image data. Accordingly, a decoder can extract the filter parameters from the header.

According to another embodiment of the present invention, the filter parameters are inserted to the encoded image data in an additional message. Preferably, the message is a Supplemental enhancement information.

Preferably, the image is divided into a plurality of image blocks and each block is encoded separately. Accordingly, an individual filter parameter can be estimated for each block.

According to another preferred embodiment, the filter parameters are determined on a basis on individual images.

According to still another embodiment, the image is divided into separate slices and an individual filter parameter is determined for each slice.

According to another preferred embodiment, the filter parameter is determined based on a predetermined number of images.

Preferably, the image data is separated into a plurality of components and a filter parameter is determined for each component individually, In this manner, a separate filter component can be determined, for instance, for luminance and chrominance data or for each color component.

Preferably, the encoder further comprises a filter for filtering the decoded image data in the encoder. In this way, the filtered image data can be stored in the memory as reference data in order to improve the image quality of the reference data.

According to another embodiment of the present invention, the filter is filtering the predicted image data.

Preferably, the encoder further comprises a de-blocking unit for de-blocking the decoded image data. In this way, the de-blocking and the adaptive filtering are carried out separately.

The above and other objects and features of the present invention will become more apparent from the following description of the embodiments, in which:

Fig.1 schematically illustrates a block diagram form the configuration of a conventional hybrid video encoder;

Fig. 2 schematically illustrates the block diagram form the configuration of a convention hybrid video decoder;

Fig. 3 schematically illustrates in a block diagram form the configuration of a hybrid video encoder with an filter parameter estimation;

Fig. 4 schematically illustrates in a block diagram form the configuration of hybrid video decoder with an adaptive filter in accordance with the present invention;

Fig. 5 schematically illustrates in a block diagram form the configuration of a hybrid video encoder with an adaptive filter in the decoding loop;

Fig. 6 schematically illustrates in a block diagram form the configuration of hybrid video decoder storing the filtered image data as reference data;

Fig. 7 schematically illustrates in a block diagram form the configuration of a hybrid video encoder further employing an additional de-blocking filter;

Fig. 8 schematically illustrates in a block diagram form the configuration of a hybrid video encoder employing an adaptive filtering between image prediction and prediction error calculation; and

Fig. 9 schematically illustrates in a block diagram form the configuration of an video encoder employing a filter estimation in an image encoder when no image prediction is employed in the encoder.

The present invention relates an adaptive filtering of disturbed image data, especially to a filtering of image data disturbed during an encoding and subsequent decoding process. Modern image recording / transmitting systems aim to reduce the data volume by compressing the image data. For this purpose, an encoder is compressing the image data before recording or transmitting and a decoder is uncompressing the compressed data for a reproduction.

Although it is possible to implement the present invention in an hybrid video encoder, the present invention is not limited to a video encoder employing image prediction. Rather, the present invention can be also realized by any other image encoding device.

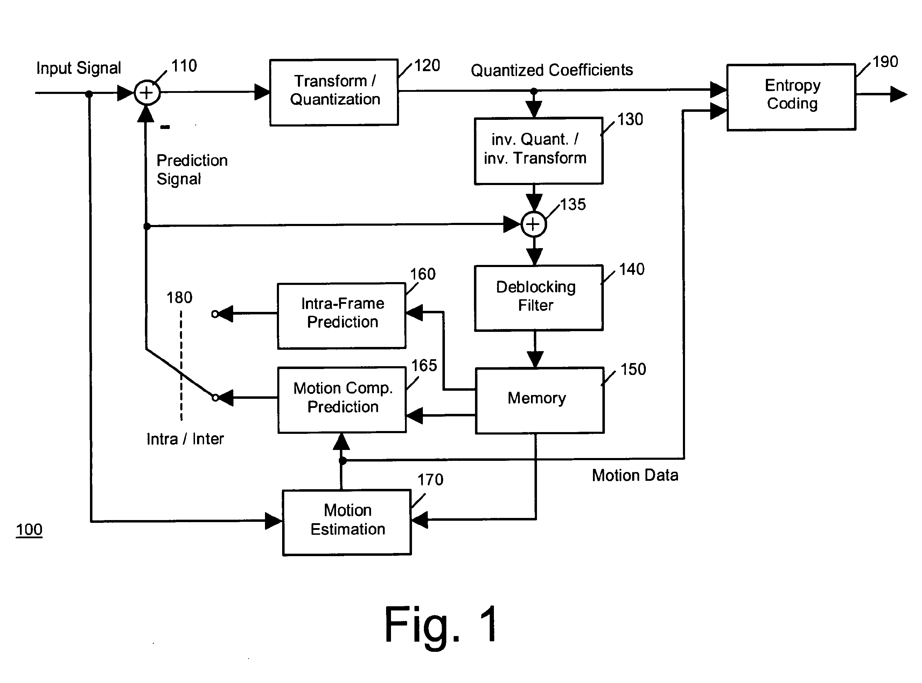

Referring to Fig. 1, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 1 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 1, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

This is accomplished by a motion estimator unit 170, receiving the current input signal and the locally decoded images.

Based on the results of motion estimation, motion compensation performed by motion compensation prediction unit 165 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. A switch between Intra-mode, i.e. a processing by Intra-frame prediction unit 160, and Inter-mode, i.e. a processing by motion compensation prediction unit 165, is controlled by Intra/Inter switch 180.

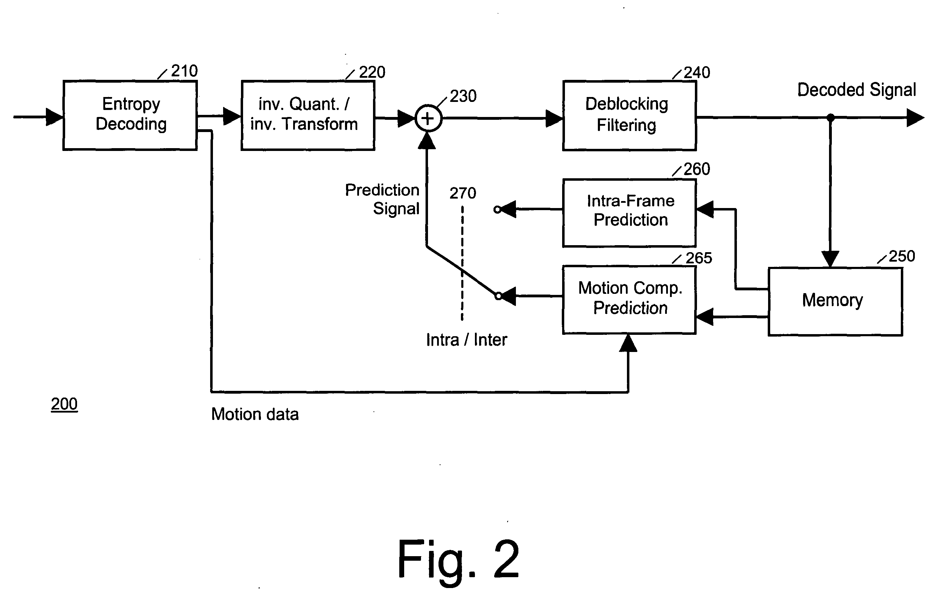

For reconstructing the encoded images at the decoder side, the encoding process is applied in reverse manner. A schematic block diagram, illustrating the configuration of the corresponding decoder generally denoted by reference numeral 200, is shown in Fig. 2. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

De-blocking filters 140 and 240 only aim to reduce the de-blocking effects by smoothing the edges of the macro blocks. For example, the de-blocking filter can be realized by a linear filtering of the image data near to the borders on the image blocks. However, such a de-blocking filter does not confirm any further image improvement, for instance, to reduce the quantization noise, or to remove any distortions caused during the encoding / decoding process

In order to further improve the image quality, an additional filtering may be applied to the decoded image data. For this purpose, the de-blocking filter is substituted by another filter, or an additional filter is employed after the de-blocking filter. The enhancement of the additional filtering is improved by adapting the parameters of the filter according to the current image data. In this way, a different filtering is applied depending on the present image content and / or the disturbances included in the present decoded image data.

In the encoder, it is possible to compare the original undisturbed input image data, the corrupted image data obtained by encoding and subsequently decoding the image data, and the result of filtering the corrupted image data. Thus, a particular set of filter parameters can be determined, in order to obtain filtered image data which comes close to the uncorrupted image data. For example, the difference between the corrupted and the filtered image data is calculated. Based on this difference the filter parameter are adjusted in order to minimize the difference. The difference between the two images can be calculated, for instance, by computing a means square error, or in another way.

When the filter parameter determination is performed in an image encoder employing a predictive image encoding, decoded image data is generated in the prediction loop of the encoder. Thus, a filter parameter can be determined by comparing the undisturbed input signal with the image data decoded in the prediction loop.

However, the present invention can also be implemented by an image encoder including no image prediction section. In this case, the present invention requires an additional image decoder to be employed for obtaining decoded image data. By comparing this decoded image data with the input signal, is possible to determine optimized filter parameters, even if no image prediction is implemented in the encoder.

The determination of the optimized filter parameters is carried out either in an iterative or in an analytic manner. When the filter parameters are to be determined analytically, a system for equations is formed and solved. The determination of optimized filter parameters can be achieved, for instance, by considering the auto-correlation function of the corrupted image data and a cross correlation between the corrupted and the uncorrupted image data. A particular scheme for estimating an optimized set of filter parameters is obtained by a Wiener filter.

The class of Wiener filter comprises all linear optimum time-discrete filters. The goal of the Wiener filter is to filter out noise having a statistical character. In the case of video coding the quantization noise is considered as a noise that is added to the original video signal. Wiener filters are designed to minimize a mean-square error between the output of the filter and a desired uncorrupted signal.

In order to determine a set of M filter parameters w for a Wiener filter, an MxM auto-correlation matrix R of the corrupted image data and a Mx1 cross-correlation vector p between the corrupted and the original image data has to be computed. With these computational results, the filter coefficients are determined to:

$$w = R^{-1} \times p \; ;$$

wherein $R^{-1}$ denotes the inversion of the auto-correlation matrix R.

Based on the filter parameters w, the filtered data is obtained by a convolution of the disturbed data with the filter parameters.

For example, a two dimensional 3x3 tap-filter requires nine filter parameters:

$$w = \begin{pmatrix} w_{11} & w_{12} & w_{13} \\ w_{21} & w_{22} & w_{23} \\ w_{31} & w_{32} & w_{33} \end{pmatrix}.$$

In order to determine these filter parameters, a 9x9 element auto-correlation matrix and a 9x1 cross-correlation vector are required.

$$R = \begin{pmatrix} R_{11} & \cdots & R_{19} \\ \vdots & \ddots & \vdots \\ R_{91} & \cdots & R_{99} \end{pmatrix} \; ; \quad p = \begin{pmatrix} p_1 \\ \vdots \\ p_9 \end{pmatrix}.$$

For example a 2-dimensional 3x3 filter matrix is:

$$w_{3x3} = \begin{pmatrix} -0.03495 & 0.05748 & -0.02351 \\ 0.05896 & 0.88896 & 0.05978 \\ -0.02719 & 0.06011 & -0.03945 \end{pmatrix}.$$

In order to obtain a filtered image value, the corrupted pixel value 229 and its neighboring pixel values are applied to the filter according to the following formula:

$$s_{filtered} = \begin{pmatrix} 192 & 225 & 255 \\ 146 & 229 & 255 \\ 132 & 198 & 252 \end{pmatrix} \cdot w = 227.47.$$

Thus, a value of 227.47 is obtained which is clipped to the pixel value 227. In that case, the decoded and filtered pixel value of 227 is the same as the original pixel value of 227.

In this example, a two dimensional 3x3 tap-filter is described. However, any other size or dimension of a filter may be possible. For example, the filter may also be employed as one dimensional filter. Any number of filter coefficients is possible. For instance, a 7x7 tap-filter may be also used. By increasing the number of filter coefficients, the accuracy of the filter is improved.

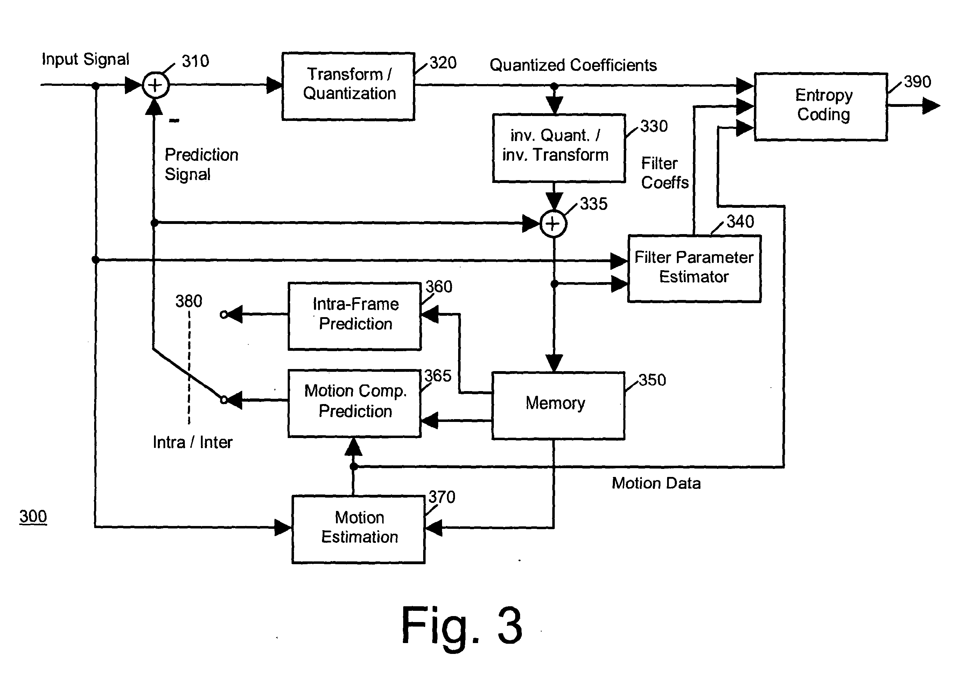

Fig. 3 illustrates an image encoder according to the first embodiment of the present invention. The encoder employs a differential pulse code modulation (DPCM) approach for transmitting only the difference between subsequent images over image sequence. An adaptive set of filter parameters is determined in filter parameter estimator 340. The filter parameter estimation is based on the decoded image data and the corresponding uncorrupted image data of the input signal. The filter parameter estimator provided the determined filter parameter to coding unit 390. The coding unit combined the encoded image data and the filter parameter in a single bit stream.

For example, the filter parameters can be inserted into the header of an encoded image data sequence. Alternatively, the filter parameter can be inserted into the encoded image data as a separate information packet. For example, the information are transmitted in an Supplemental enhancement information message (SEI-message). In this SEI-message, the filter coefficients are included as additional data fields. In this way, a conventional decoder is reading the encoded image data and the SEI-message. If the decoder cannot use the additional filter parameter data, the decoder may skip the corresponding data and decode the image data in a conventional manner. Otherwise, if the decoder is adapted to perform a filtering by means of transmitted filter parameters, the decoder may extract the filter parameters and set up the filter accordingly. An example of a SEI-message for transmitting the filter coefficients is shown in table 1. In this example, the filter parameters are included as optional post-filter parameters. Table 2 illustrates an exemplary syntax for transmitting the filter parameters.

Table 1: Example of SEI payload syntax

| sei_payload( payloadType, payloadSize ) { | C | Descriptor |
|---|---|---|
| if( payloadType == 0 ) | | |
| buffering_period( payloadSize ) | 5 | |
| else if( payloadType == 1 ) | | |
| pic_timing( payloadSize ) | 5 | |
| else if( payloadType == 2 ) | | |
| pan_scan_rect( payloadSize ) | 5 | |
| else if( payloadType == 3 ) | | |
| filler_payload( payloadSize). | 5 | |
| else if( payloadType == 4 ) | | |
| user_data_registered_itu_t_t35(payloadSize) | 5 | |
| else if( payloadType == 5 ) | | |
| user_data_unregistered(payloadSize) | 5 | |
| else if( payloadType == 6 ) | | |
| recovery_point( paytoadSize) | 5 | |
| else if( payloadType == 7 ) | | |
| dec_ref_pic_marking_repetition(payloadSize) | 5 | |

(continued)

| sei_payload( payloadType, payloadSize ) { | C | Descriptor |
|---|---|---|
| else if( payloadType == 8 ) | | |
| spare_pic( payloadSize) | 5 | |
| else if( payloadType == 9 ) | | |
| scene_info(payloadSize) | 5 | |
| else if( payloadType == 10 ) | | |
| sub_seq_info(payloadSize) | 5 | |
| else if( payloadType == 11 ) | | |
| sub_seq_layer_characteristics(payloadSize) | 5 | |
| else if( payloadType == 12 ) | | |
| sub_seq_characteristics(payloadSize) | 5 | |
| else if( payloadType == 13 ) | | |
| full_frame_freeze(payloadSize) | 5 | |
| else if( payloadType == 14 ) | | |
| full_frame_freeze_release( payloadSize) | 5 | |
| else if( payloadType == 15 ) | | |
| full_frame_snapshot( payloadSize ) | 5 | |
| else if( payloadType == 16 ) | | |
| progressive_refinement_segment_start( payloadSize) | 5 | |
| else if( payloadType == 17 ) | | |
| progressive_refinement_segment_end( payloadSize) | 5 | |
| else if( payloadType == 18 ) | | |
| motion_constrained_slice_group_set( payloadSize ) | 5 | |
| else if( payloadType ==19) | | |
| film_grain_characteristics(payloadSize) | 5 | |
| else if( payloadType == 20 ) | | |
| deblocking_filter_displayyreference(payloadSize) | 5 | |
| else if( payloadType == 21 ) | | |
| stereo_video_info(payloadSize) | 5 | |
| else if( payloadType == 22) | | |
| post_filter(payloadSize) | 5 | |
| else | | |
| reserved_sei_message( payload Size) | 5 | |
| if( !byte_aligned( ) ) { | | |
| bit_equal_to_one /* equal to 1 */ | 5 | f(1) |
| while( !byte_aligned( )) | | |
| bit_equalto_zero /* equal to 0 */ | 5 | f(1) |
| } | | |
| } | | |

Table 2: Example of SEI payload syntax for transmitting post-filter data

| post_filter ( payloadSize) { | C | Descriptor |
|---|---|---|
| filter_dimension | 5 | u(1) |
| filter_length | 5 | ue(v) |
| scaling_factor | 5 | ue(v) |
| for (color_component = 0; color_component < 3; color component ++) { | | |
| for (cy = 0; cy < filter_length; cy ++) { | | |
| if (!filter_dimension) | | |
| filter_coeffs[color_component][cy] | 5 | se(v) |
| else | | |
| for (cx = 0; cx < filter_length; cx ++) | | |
| filter_coeffs[color_component][cy][cx] | 5 | se(v) |
| } | | |
| } | | |
| } | | |

In this example, filter_dimension specifies the dimension of the filter minus 1. A value of 0 specifies a one-dimensional filter whereas a value of 1 specifies a two-dimensional filter. The parameter filter_length specifies the length of the filter. This is equivalent to the number of filter-taps for each dimension. The scaling of the filter coefficients is specified by scaling_factor. Each filter coefficient is divided by the scaling factor before filtering. Therefore the scaling factor defines the precision of the filter coefficients. The parameters fitter_coeffs[cotor_component][cy][cx] specify the up-scaled single filter coefficient values. Each filter coefficient is divided by scaling_factor before filtering. color_component signals the color component to be filtered. cy represents a counter in vertical direction, cx represents a counter in horizontal direction (for two-dimensional filtering only). If fitter_dimension signals a two-dimensional filter, the filter coefficients are applied as a two-dimensional FIR filter. If fitter_dimension signals a one-dimensional filter, the filter coefficients are applied as a one-dimensional FIR filter in horizontal direction in a first step and in vertical direction in a second step.

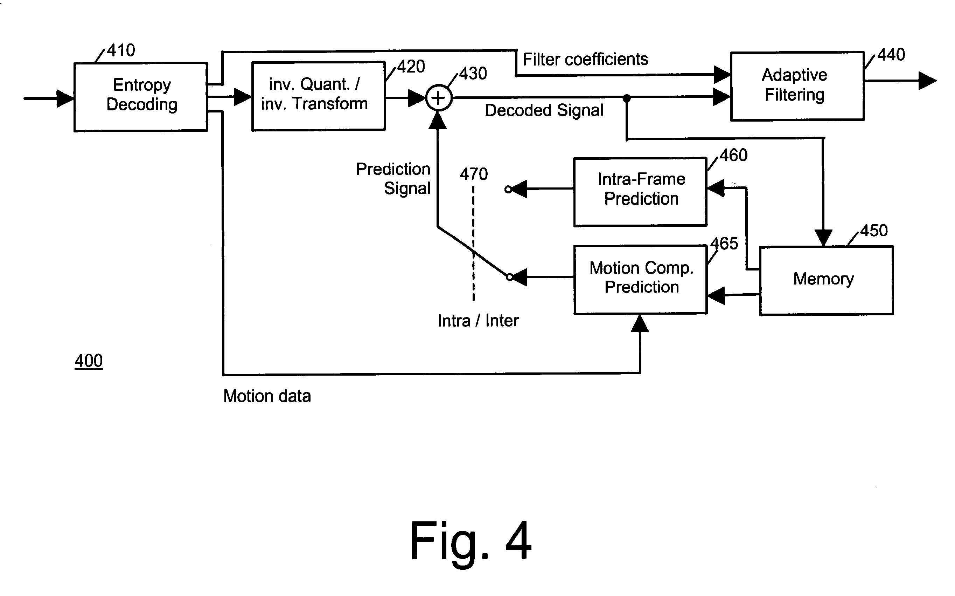

Fig. 4 illustrates an image decoder for decoding and filtering image data in accordance with the filter parameters provided by the image encoder of the present invention. Decoder 410 extracts the filter coefficients from the encoded image data and provides the extracted coefficients to filter 440. The filter is filtering the decoded image data in accordance with the extracted filter coefficients. In this way, the decoder applies a filtering to the decoded image data in order to obtain filtered image data which comes close to the undisturbed image data.

Additionally, a de-blocking filter may be employed in the decoder for de-blocking the decoded image data, before the data is provided to filter 440 and / or the decoded data are stored in memory 450. In this way, the image quality of the reference data used for an image prediction is improved.

According to this embodiment, the filter 440 is employed in the decoder as a post-filter. Thus, the filter is filtering the image data outside the prediction section after the image decoding and the image prediction has been completed. In this way, it is possible to apply the filtering based on the transmitted filter parameters, even when no image prediction is executed. For example, a filtering based on transmitted filter parameters can be limited to intra-coded image data. Alternatively, a filtering may be applied also to intra-coded as well as to inter-code image data. In order to perform a post filtering, the filter is employed outside the prediction section of the encoder.

When an image sequence is encoded each image is separated into a plurality of image blocks, and each image block is encoded separately. Accordingly, it is possible to determine a separate set of filter parameters for each image data block. In this way, a very precise filtering is achieved. However, when calculating separate filter parameters for each image block, a large amount of additional filter parameters have to be inserted into the encoded image data and the additional data has to be transferred to the decoder.

In order to reduce the data volume of the additional filter parameters, only one set of filter parameters is computed for a plurality of image blocks. For example, a filter parameter estimation may be carried out for a complete image. Alternatively, the image can be separated into a plurality of slices. For example, each slice comprises a plurality of image blocks relating to the same image row or column. Based in this separation, a set of filter parameters is determined for each slice. Other combinations of image blocks for determining a common set of filter parameters are possible.

Alternatively, the filter parameters are determined on a basis of complete images. For example, one set of filter parameters is determined and transmitted for each image. However, it is also possible to determine an apply the filter parameters for a plurality of successive images. For example, the filter parameters are determined on a basis of group of pictures (GOP), or any other predetermined number of successive images.

Image data of a color image may include separate image data for each color component. For example, the image data of red (R), green (G), and blue (B) image data may be encoded separately. Alternatively, the image data may included separate data elements for luminance (Y) and chrominance (Cr, Cb). Any other separation of the image data into separate components is possible. In order to obtain an optimized set of filter parameters, the filter parameters can be determined separately for the image data of each color component.

When image prediction is performed, prediction units 360, 365 and 460, 465 refer to the reference data stored in memory 350 and 450, respectively. In order to improve the image quality of the stored reference data, a filtering may be applied to the decoded image data. In a conventional encoder / decoder, a de-blocking filter is used. Alternatively, the conventional de-blocking filter can be replaced by a filtering using the above described adapted filter coefficients.

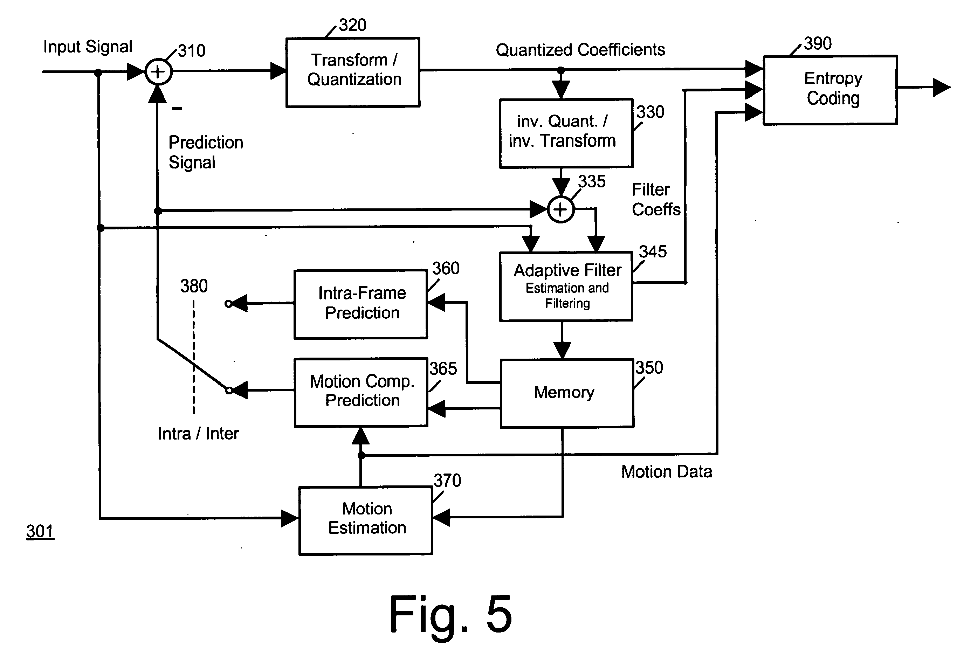

An example for substituting the conventional de-blocking filter by an adaptive filter according to the present invention is illustrated in Fig. 5. In this example, the filter 440 is located between the decoding unit 330, 335 and the memory 350. Filter parameters are determined based on the decoded image data and the corresponding uncorrupted image data of the input signal. The filtered image signal is stored in memory 350 as reference data for image prediction.

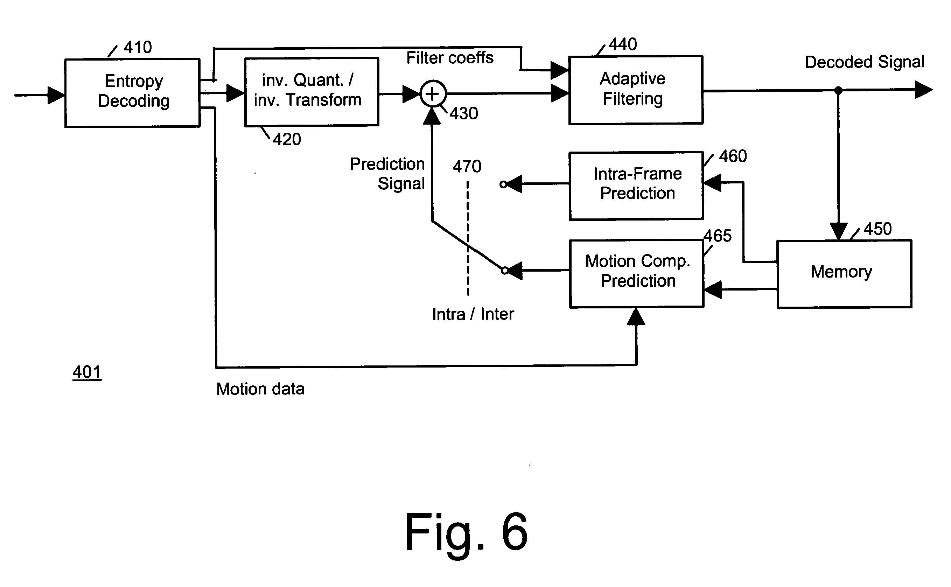

As a image prediction in the decoder requires the same reference data as used in the encoder, the same filtering of the decoded image data has to be applied to the decoded image data in the decoder. Fig. 6. shows a decoder employing a filtering of the decoded image data for an image prediction in accordance with the encoder of Fig. 5. The filter parameters are received in a bitstream together with the encoded image data. After extracting the filter parameters, the parameters are provided to filter 440 for applying the same filtering as carried in the encoder. Thus, the filtered image data corresponds to the image prediction reference data of the encoder. In order to obtain the same predictive image data in the decoder, the image data is stored in memory 450.

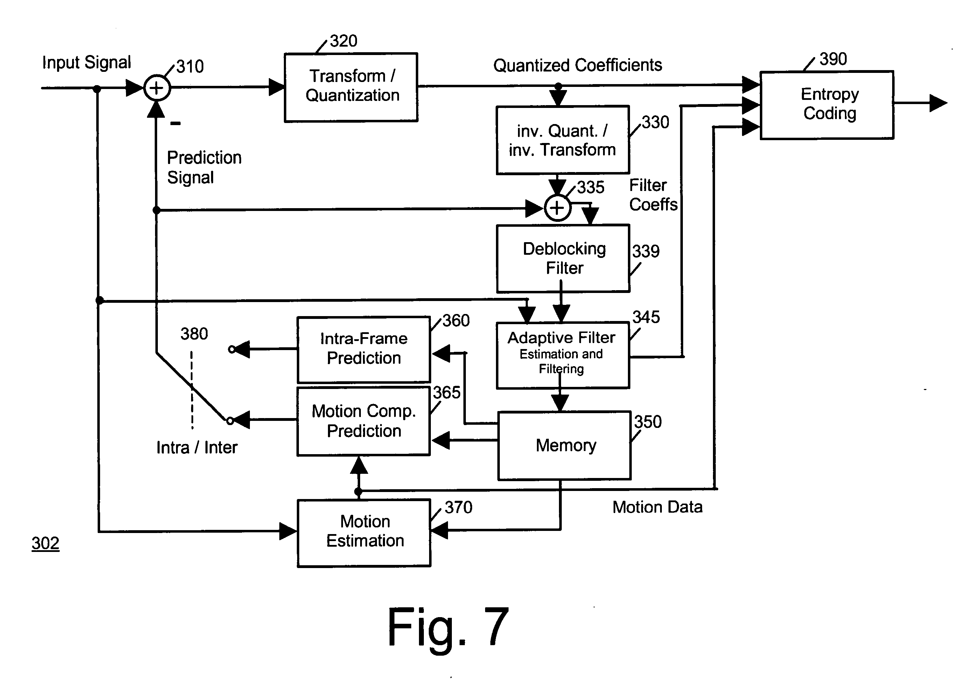

In this example, the de-blocking filter is substituted by the adaptive Wiener filter. Alternatively, the adaptive filtering can also employed in addition to the de-blocking filter. An example configuration comprising a de-blocking filter and an additional adaptive filter is shown in Fig. 7. The decoded image data is de-blocking filtered, first. Subsequently, an adaptive filtering is applied for further increasing the image quality. In this way, a conventional encoder can be easily expanded by additionally including an filter parameter estimation and an adaptive filter.

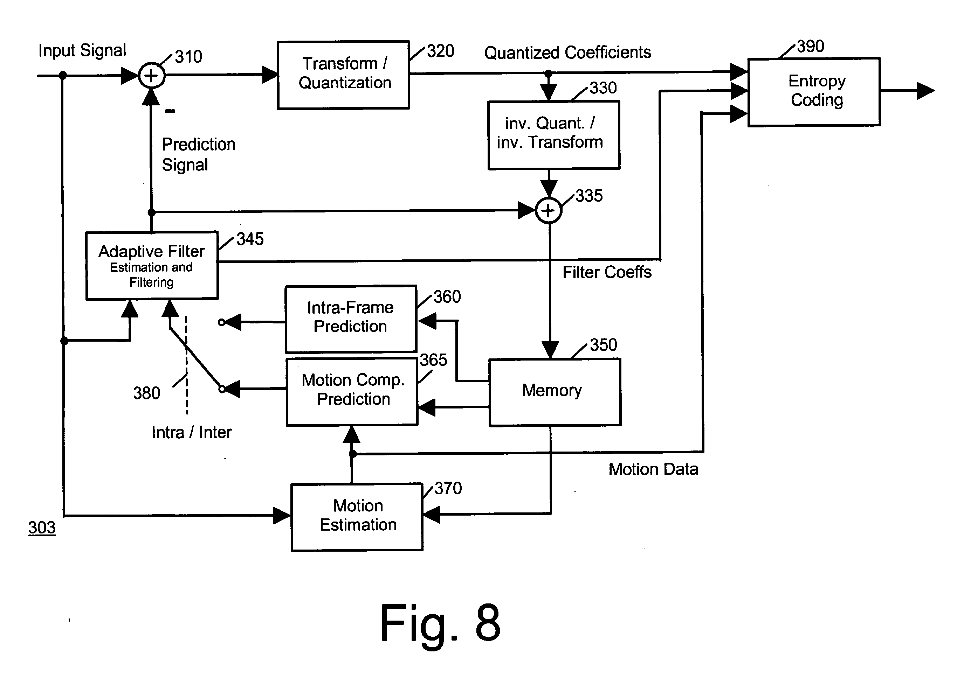

In the above described examples, the adaptive filtering is applied to the decoded image data before storing the image data in memory 450. Memory 450 stores the filtered image data. However, it is also possible to apply the adaptive filtering after image prediction is performed. An example for filtering the predicted image data is illustrated in Fig. 8. In this example, the decoded image data are directly stored in memory 450 as reference data. Based on this reference data, an image prediction is carried out in prediction unit 360 or 365. The filter parameters are determined based on the predicted image data and the corresponding uncorrupted image data of the input image signal. According to the determined filter parameters, the predicted image data is filtered and provided to prediction error determining unit 310. As the filtered image data comes close to the original image data, the prediction error is reduced.

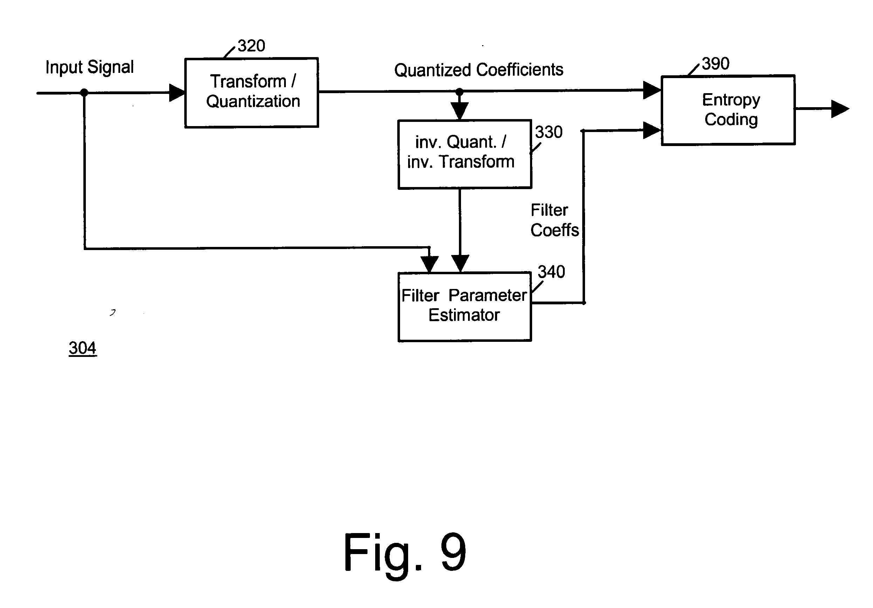

Fig. 9. illustrates another example of an image encoder according to the present invention. In this example, a filter parameter estimation is employed in an image encoder having no image prediction section. Thus, the input image data is dicrete cosine transformed and quantized by image encoder 320 and entropy encoded by entropy coding section 390. In order to determine the filter parameters, an additional image decoder is included in the encoder. The decoder is decoding the encoded image data and the filter parameter estimator is determining the adapted filter parameters based on the decoded image data decoded by the additional decoder 330 and the corresponding image data of the input signal. In this way, an enhanced filtering of image data is possible, even if no image prediction is supported by the encoder.

Summarizing, is the particular approach of the present invention to determine an adapted set of filter parameters based on the disturbed image data and the corresponding original uncorrupted image data. Since the original image data is not available in a decoder, a conventional encoder can only employ an adaptive filtering based on the corrupted image signal. The present invention determines an enhanced set of filter parameters based on an uncorrupted image signal in the encoder. In order enable a filtering of image data in the decoder, the determined filter parameters are transmitted from the encoder to the decoder in combination with the encoded image data. The decoder is extracting the filter parameters from the encoded image data. In this way, the decoder applies an improved filtering event though the uncorrupted image data is not available at the decoder.

**Claims**

1. An image encoder for encoding a sequence of images, comprising:

   an encoding unit (320) for encoding image data;
   a decoding unit (330, 335) for decoding encoded image data; and
   a filter parameter estimator (340) for determining a filter parameter based on the image data to be encoded and corresponding image data of the decoding unit (330, 335);
   wherein said filter parameter is inserted into the encoded image data.

2. An image encoder according to claim 1, further comprising:

   a prediction unit (360, 365) for predicting image data of a current image to be encoded based on reference image data;
   a prediction error determining unit (310) for calculating a prediction error based on the predicted image data and the current image data;
   a memory (350) for storing decoded image data as reference image data;
   wherein said encoding unit (320) encoding the determined prediction error;
   wherein said decoding unit (330, 335) decoding the encoded image data for obtaining currently decoded image data; and
   wherein said filter parameter estimator (340) determining a filter parameter based on the image data to be encoded and the corresponding predicted image data.

3. An image encoder according to claim 1, further comprising:

   a prediction unit (360, 365) for predicting image data of a current image to be encoded based on reference image data;
   a prediction error determining unit (310) for calculating a prediction error based on the predicted image data and the current image data;
   a memory (350) for storing decoded image data as reference image data;
   wherein said encoding unit (320) encoding the determined prediction error;
   wherein said decoding unit (330, 335) decoding the encoded image data for obtaining currently decoded image data; and
   wherein said filter parameter estimator (340) determining a filter parameter based on the image data to be encoded and the corresponding currently decoded image data.

4. An image encoder according to any of claims 1 to 3, wherein said filter parameter estimator (340) determining a filter parameter for minimizing a difference between a result of filtering the image data of the decoding unit (330, 335) and the corresponding image data of the current image;

5. An image encoder according to any of claims 1 to 4, wherein said filter parameter estimator (340) determining the filter parameter based on an autocorrelation of the image data of the decoding unit (330, 335), and a cross-correlation between the image data of the decoding unit (330, 335) and the corresponding image data of the current image.

6. An image encoder according to any of claims 1 to 5, wherein said filter parameter estimator (340) determining a filter parameter for a Wiener filter.

7. An image encoder according to any of claims 1 to 6, wherein the filter parameter being inserted into the header of the encoded image data

8. An image encoder according to any of claims 1 to 7, wherein the filter parameter being inserted into the encoded image data as an additional message.

9. An image encoder according to claim 8, wherein the additional message being a Supplemental enhancement information.

10. An image encoder according to any of claims 1 to 9, wherein the image data of each image is divided into a plurality of blocks which are individually encoded.

**11.** An image encoder according to claim 10, wherein said filter parameter estimator (340) determining a filter parameter for each image data block separately.

**12.** An image encoder according to any of claims 1 to 10, wherein said filter parameter estimator (340) dividing the image into a plurality of slices and determining a filter parameter for each slice individually.

**13.** An image encoder according to any of claims 1 to 10, wherein said filter parameter estimator (340) determining a filter parameter based on the image data of an image.

**14.** An image encoder according to any of claims 1 to 10, wherein said filter parameter estimator (340) determining a filter parameter based on image data of a plurality of images.

**15.** An image encoder according to any of claims 1 to 14, wherein the image data is separated into a plurality of components, and said filter parameter estimator (340) determining a filter parameter for each component individually.

**16.** An image encoder according to claim 15, wherein said image data including a plurality of color components.

**17.** An image encoder according to claim 15, wherein said image data including luminance and chrominance components.

**18.** An image encoder according to any of claims 1 to 17, further comprising a filter (345) for filtering image data in accordance with the determined filter parameter.

**19.** An image encoder according to any of claims 2 to 17, further comprising a filter (345) for filtering the currently decoded image data.

**20.** An image encoder according to any of claims 2 to 17, further comprising a filter (345) for filtering predicted image data.

**21.** An image encoder according to any of claims 1 to 20, further comprising a de-blocking unit (339) for de-blocking the currently decoded image data.

**22.** An image decoder for decoding a sequence of encoded image data, comprising:

a decoding unit (420, 430) for decoding encoded image data;
a filter (440) for filtering image data of the decoding unit;
**characterized by**
a filter parameter extracting unit for extracting a filter parameter inserted into the encoded image data;
wherein said filter (440) performing said filtering operation in accordance with the extracted filter parameter.

**23.** An image decoder according to 22, further comprising
a prediction unit (460, 465) for predicting image data of a current image to be decoded based on reference image data; and
a memory (450) for storing decoded image data as reference image data;
wherein said filter (440) filtering the image data predicted by said prediction unit (460,465).

**24.** An image decoder according to 22, further comprising
a prediction unit (460, 465) for predicting image data of a current image to be decoded based on reference image data;
wherein said filter (440) filtering the decoded image data decoded by said decoding unit (420, 430); and
said image decoder further comprising a memory (450) for storing filtered image data as reference image data.

**25.** An image decoder according to any of claims 22 to 24, wherein the filter parameter is extracted from a header of the encoded image data.

**26.** An image decoder according to any of claims 22 to 24, wherein the filter parameter is extracted from an additional message inserted into the encoded image data.

**27.** An image decoder according to claim 26, wherein the additional information packet being a Supplemental enhancement information.

28. An image decoder according to any of claims 21 to 27, further comprising a de-blocking unit (439) for de-blocking the decoded image data.

29. An image decoder according to claim 28, wherein said filter filtering the de-blocked image data, and outputting the filtered image data to said memory (450).

30. An image encoding method for encoding a sequence of images, comprising the steps of:

encoding image data;
decoding encoded image data;
determining a filter parameter based on the image data to be encoded and corresponding image data of the decoding step; and
inserting the determined filter parameter into the encoded image data.

31. An image encoding method claim 30, further comprising the steps of:

predicting image data of a current image to be encoded based on reference image data;
calculating a prediction error based on the predicted image data and the current image data;
storing decoded image data as reference image data in a memory (350);
wherein said encoding step encoding the determined prediction error;
wherein said decoding step decoding the encoded image data for obtaining currently decoded image data; and
wherein said determining step determining a filter parameter based on the image data to be encoded and the corresponding predicted image data.

32. An image encoding method claim 30, further comprising the steps of:

predicting image data of a current image to be encoded based on reference image data;
calculating a prediction error based on the predicted image data and the current image data;
storing decoded image data as reference image data in a memory (350);
wherein said encoding step encoding the determined prediction error;
wherein said decoding step decoding the encoded image data for obtaining currently decoded image data; and
wherein said determining step determining a filter parameter based on the image data to be encoded and the corresponding currently decoded image data.

33. An image encoding method according to any of claims 30 to 32, wherein said determining step determining a filter parameter for minimizing a difference between a result of filtering image data of the decoding step and the corresponding image data of the current image;

34. An image encoding method according to any of claims 30 to 33, wherein said determining step determining the filter parameter based on an autocorrelation of the currently image data of the decoding step, and a cross-correlation between the image data of the decoding step and the corresponding image data of the current image.

35. An image encoding method according to any of claims 30 to 34, wherein said determining step determining a filter parameter for a Wiener filter.

36. An image encoding method according to any of claims 30 to 35, wherein said inserting step inserting the filter parameter into the header of the encoded image data

37. An image encoding method according to any of claims 30 to 35, wherein said inserting step inserting the filter parameter into the encoded image data as an additional message.

38. An image encoding method according to claim 37, wherein the additional message is a Supplemental enhancement information.

39. An image encoding method according to any of claims 30 to 38, further comprising a step of dividing the image data of each image into a plurality of blocks, wherein each image block is individually encoded.

40. An image encoding method according to claim 39, wherein said determining step determining a filter parameter for each image data block separately.

41. An image encoding method according to any of claims 30 to 39, further comprising a step for dividing the image into a plurality of slices, wherein said determining step determining a filter parameter for each slice individually.

42. An image encoding method according to any of claims 30 to 39, wherein said determining step determining a filter parameter based on the image data of an image.

43. An image encoding method according to any of claims 30 to 39, wherein said determining step determining a filter parameter based on image data of a plurality of images.

44. An image encoding method according to any of claims 30 to 40, wherein the image data is separated into a plurality of components, and said determining step determining a filter parameter for each component individually.

45. An image encoding method according to claim 44, wherein said image data including a plurality of color components.

46. An image encoding method according to claim 45, wherein said image data including luminance and chrominance components.

47. An image encoding method according to any of claims 30 to 46, further comprising a filtering step for filtering image data in accordance with the determined filter parameter.

48. An image encoding method according any of claims 31 to 46, further comprising a filter (345) for filtering the currently decoded image data.

49. An image encoding method according any of claims 31 to 46, further comprising a filter (345) for filtering predicted image data.

50. An image encoding method according any of claims 31 to 46, further comprising a de-blocking unit (339) for de-blocking the currently decoded image data.

51. An image decoding method for decoding a sequence of encoded image data, comprising the steps of:

decoding encoded image data;
filtering image data of the decoding step;
**characterized by** the step of
extracting a filter parameter inserted into the encoded image data;
wherein said filtering step performing said filtering operation in accordance with the extracted filter parameter.

52. An image decoding method according to claim 51, further comprising the steps of:

predicting image data of a current image to be decoded based on reference image data; and
storing decoded image data as reference image data in a memory (450);
wherein said filtering step filtering the predicted image data.

53. An image decoding method according to claim 51, further comprising the step of:

predicting image data of a current image to be decoded based on reference image data;
wherein said filtering step filtering the decoded image data ; and
said method further storing filtered image data as reference image data in a memory (450).

54. An image decoding method according to any of claims 51 to 53, wherein said extracting step extracting the filter parameter from a header of the encoded image data.

55. An image decoding method according to any of claims 51 to 53, wherein said extracting step extracting the filter parameter from an additional message inserted into the encoded image data.

56. An image decoding method according to 55, wherein the additional information packet being a Supplemental enhancement information.

57. An image decoding method according to any of claims 51 to 56, further comprising a de-blocking step for de-blocking the decoded image data.

58. An image decoding method according to claim 57, wherein said filtering step filtering the de-blocked image data, and said storing step storing the filtered image data in said memory (450).

Fig. 1

Fig. 2

Fig. 3

Input Signal

310

Transform / Quantization  320  Quantized Coefficients

Entropy Coding  390

Prediction Signal

inv. Quant. / inv. Transform  330

Filter Coeffs

335

340

Filter Parameter Estimator

Intra-Frame Prediction  360

380

Motion Comp. Prediction  365

Memory  350

Intra / Inter

Motion Estimation  370

Motion Data

300

EP 1 841 230 A1

18

Fig. 4

Fig. 5

Fig. 6

Fig. 7

Fig. 8

EP 1 841 230 A1

Fig. 9

EP 1 841 230 A1

European Patent
Office

# EUROPEAN SEARCH REPORT

Application Number

EP 06 00 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 453 319 A (MATSUSHITA ELECTRIC INDUSTRIAL CO., LTD) 1 September 2004 (2004-09-01) | 1,22,30, 51 | INV. H04N7/26 |
| A | * abstract * * paragraph [0102] * * paragraph [0110] * * paragraph [0113] * * paragraphs [0116], [0117] * * paragraph [0120] * * figures 11,13 * | 1-58 | |
| X | EP 1 404 136 A (NTT DOCOMO, INC) 31 March 2004 (2004-03-31) * abstract * | 1,22,30, 51 | |
| A | * paragraphs [0040] - [0042] * * figure 16 * | 1-58 | |
| A | WO 2005/034517 A (THOMSON LICENSING S.A; TOURAPIS, ALEXANDROS; BOYCE, JILL, MACDONALD) 14 April 2005 (2005-04-14) * abstract * | 1-58 | |

TECHNICAL FIELDS
SEARCHED      (IPC)

H04N

The present search report has been drawn up for all claims

| Place of search | Date of completion of the search | Examiner |
|---|---|---|
| Munich | 8 September 2006 | Lindgren, Johan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**     EP 06 00 6302

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2006

| Patent document cited in search report | | Publication date | Patent family member(s) | | Publication date |
|---|---|---|---|---|---|
| EP 1453319 | A | 01-09-2004 | AU | 2002347635 A1 | 10-06-2003 |
| | | | AU | 2002349735 A1 | 10-06-2003 |
| | | | BR | 0206777 A | 25-02-2004 |
| | | | BR | 0206820 A | 03-02-2004 |
| | | | CA | 2433455 A1 | 05-06-2003 |
| | | | CA | 2435757 A1 | 05-06-2003 |
| | | | CN | 1526241 A | 01-09-2004 |
| | | | CN | 1489867 A | 14-04-2004 |
| | | | EP | 1452039 A2 | 01-09-2004 |
| | | | WO | 03047262 A2 | 05-06-2003 |
| | | | WO | 03047267 A1 | 05-06-2003 |
| | | | MX | PA03006640 A | 15-10-2003 |
| | | | MX | PA03006715 A | 24-10-2003 |
| EP 1404136 | A | 31-03-2004 | CN | 1465193 A | 31-12-2003 |
| | | | WO | 03003749 A1 | 09-01-2003 |
| | | | US | 2004184666 A1 | 23-09-2004 |
| WO 2005034517 | A | 14-04-2005 | EP | 1665804 A1 | 07-06-2006 |

EPO FORM P0459

For more details about this annex : see Official Journal of the European Patent Office, No. 12/82

**EP 1 841 230 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050105627 A